(19) Europäisches Patentamt
European Patent Office
Office européen des brevets

(11) Publication number: 0 204 340 B1

(12) # EUROPEAN PATENT SPECIFICATION

(45) Date of publication of patent specification: 11.12.91

(51) Int. Cl.$^5$: C08F 4/685, C08F 10/00, C07C 9/00

(21) Application number: 86107690.9

(22) Date of filing: 05.06.86

(54) **Novel catalyst and method for producing relatively narrow molecular weight distribution olefin polymers.**

(30) Priority: 06.06.85 US 741991
06.06.85 US 741992

(43) Date of publication of application:
10.12.86 Bulletin 86/50

(45) Publication of the grant of the patent:
11.12.91 Bulletin 91/50

(84) Designated Contracting States:
BE DE FR GB IT NL SE

(56) References cited:
FR-A- 2 337 737
FR-A- 2 388 835
GB-A- 2 056 998
US-A- 3 455 974

(73) Proprietor: THE DOW CHEMICAL COMPANY
2030 Dow Center Abbott Road P.O. Box 1967
Midland Michigan 48640-1967(US)

(72) Inventor: Coleman, William M.
III, 128 Cottonwood Street
Lake Jackson, TX 77566(US)

(74) Representative: Casalonga, Alain et al
BUREAU D.A. CASALONGA - JOSSE Morassistrasse 8
W-8000 München 5(DE)

EP 0 204 340 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention concerns a catalyst for polymerizing α-olefins and to a process for polymerizing α-olefins. The resultant polymers have relatively narrow molecular weight distributions. The invention also pertains to novel bidentate ligand - containing vanadium complexes.

More particularly, the present invention pertains to an improvement in a catalyst which is the catalytic product obtainable by reacting in an inert hydrocarbon medium

(A) at least one hydrocarbon soluble organomagnesium component represented by the formula $MgR''_2 \cdot xMR''_y$ wherein each R" is independently a hydrocarbyl group having from 1 to 20 carbon atoms and not containing functional groups that poison conventional Ziegler catalysts; M is Al, Zn, Si, Sn, B or P; y has a number corresponding to the valence of M and x has a value from zero to 10;

(B) a sufficient quantity of at least one halide source so as to convert all of the organic groups attached to a magnesium atom in component (A) to a halide group;

(C) at least one titanium compound represented by the formula $Ti(OR)_xX_{4-x}$ wherein each R is independently a hydrocarbyl group having from 1 to 20 carbon atoms and not containing functional groups that poison conventional Ziegler catalysts; X is a halogen and x has a value from zero to 4; and

(D) optionally, at least one compound containing at least one aromatic hydroxyl group or at least one aliphatic hydroxyl group or a mixture of such compounds; and

when components (A) and/or (B) do not contain or contain an insufficient quantity of aluminum, then

(E) an aluminum compound represented by the formula

$$AlR'''_{y'}X_{y''}$$

wherein R"' is a hydrocarbyl group having from 1 to 10 carbon atoms and not containing functional groups that poison conventional Ziegler catalysts; X is halogen and y' and y" each have a value of from zero to three with the sum of y' and y" being three is employed;

(F) a vanadium compound represented by the formulas $VO(X)_3$, $V(X)_4$ or $VO(OR)_3$ wherein X and R are as defined above;

characterized by said halide source being

(1) an active non-metallic halide, corresponding to the formula R'X wherein X is halogen and R' is hydrogen or a hydrocarbyl group having from 1 to 20 carbon atoms and such that the hydrocarbyl halide is at least as active (i.e. loosing its halogen atom) as sec-butyl chloride and does not poison the catalyst; or

(2) aluminum halides of the formula $AlR_{3-a}X_a$ wherein each R is independently hydrocarbyl as hereinbefore defined, X is a halogen and a is a number from 1 to 3,

and wherein the components are employed in quantities so as to provide the following ratios:

(1) a Mg:Ti atomic ratio of from 1:1 to 200:1;

(2) components (C) and (D) are employed in quantities which provide a molar ratio of (D):(C) of from 0:1 to 10:1;

(3) an excess X to Al ratio, i.e. the quantity of halide X above that which would be theoretically required to convert the magnesium compound to the dihalide, of from 0.0005:1 to 10:1.

(4) an Al:Ti atomic ratio of from 0.1:1 to 2000:1;

the Mg:Ti ratio expressed above is expressed as a Mg:Ti+V ratio with the same values as the Mg:Ti ratio and wherein component (F) is employed in quantities which provides a V:Ti ratio of from 0.1:1 to 50:1.

GB-A- 2 056 998 discloses a 2-component catalyst useful for polymerizing an α -olefin comprising a component (A) and an organometal component (B). The component (A) is produced by reacting a hydrocarbon-soluble organomagnesium component which may contain a metal of the 1st to 3rd groups of the Periodic Table, with a halide source and contacting the resulting product with either a compound of titanium or a compound of titanium plus a compound of vanadium. This document, however, does not disclose an active non-metallic halide nor an aluminium halide as a halide source.

FR-A- 2 337 737 discloses a catalyst useful for polymerizing olefins and comprising a transition metal compound, an organometal compound and a titanium (Ti) and/or vanadium (V) compound. It must be noticed however that nowhere in this reference any ratio between the Ti and V is given and that in none of the five examples a combination of Ti and V is used: in all the examples only Ti is used.

The excess X is the quantity of halide above that which would be theoretically required to convert the magnesium compound to the dihalide.

The present invention also pertains to novel bidentate ligand-containing vanadium complexes represented by formula XV as hereinafter described.

The present invention also pertains to a process for polymerizing α-olefins employing the aforedescribed catalyst.

The present invention is most advantageously practiced in a polymerization process wherein an α-olefin is polymerized, generally in the presence of hydrogen as a molecular weight control agent, in a polymerization zone containing an inert diluent and the catalytic reaction product as hereinbefore described. Especially advantageous is the copolymerization of ethylene and higher α-olefins using the catalytic reaction product of this invention. The foregoing polymerization process is most beneficially carried out under relatively low temperature and pressure (as compared to classical high pressure free radical techniques), although very high pressures are optionally employed.

The benefits of this invention are most advantageously obtained when the polymerization is carried out so as to produce polyolefins having a melt index below 1.0 ($I_2$).

Olefins which are suitably homopolymerized or copolymerized in the practice of this invention are generally the aliphatic α-monoolefins or α-diolefins having from 2 to 18 carbon atoms. Illustratively, such α-olefins can include ethylene, propylene, butene-1, pentene-1, 3-methylbutene-1, 4-methylpentene-1, hexene-1, octene-1, dodecene-1, octadecene-1, 1,7-octadiene, 1,4-hexadiene and mixtures thereof. It is understood that α-olefins may be copolymerized with other α-olefins and/or with small amounts, i.e., up to about 25 weight percent based on the polymer, of other ethylenically unsaturated monomers such as styrene, α-methylstyrene and similar ethylenically unsaturated monomers which do not destroy conventional Ziegler catalysts. Most benefits are realized in the polymerization of aliphatic α-monoolefins, particularly ethylene and mixtures of ethylene with up to 50, especially from 0.1 to 40, weight percent of propylene butene-1, hexene-1, octene-1, 4-methylpentene-1, 1,7-octadiene, 1,4-hexadiene or similar α-olefin or diolefin based on total monomer.

Particularly suitable titanium compounds which can be employed herein include, for example, tetraethoxy titanium, tetraisopropoxy titanium (Tipt), tetra-n-butoxy titanium, tetraphenoxy titanium, tetra-n-propoxy titanium, tetra-(2-ethylhexoxy) titanium, di-n-butoxy titanium dichloride, titanium tetrachloride and mixtures thereof.

Particularly suitable vanadium compounds which can be employed herein include, for example, vanadium oxytrichloride, vanadium oxytriisopropoxide, vanadium tetrachloride and mixtures thereof.

Particularly suitable organomagnesium compounds include, for example, hydrocarbon soluble dihydrocarbylmagnesium such as the magnesium dialkyls and the magnesium diaryls. Exemplary suitable magnesium dialkyls include particularly n-butyl-sec-butyl magnesium, diisopropyl magnesium, di-n-hexyl magnesium, isopropyl-n-butyl magnesium, ethyl-n-hexyl magnesium, ethyl-n-butyl magnesium, di-n-octyl magnesium and others wherein the alkyl has from 1 to 20 carbon atoms. Exemplary suitable magnesium diaryls include diphenylmagnesium, dibenzylmagnesium, and ditolylmagnesium. Suitable organomagnesium compounds include alkyl and aryl magnesium alkoxides and aryloxides and aryl and alkyl magnesium halides with the halogen-free organomagnesium compounds being more desirable.

Among the halide sources which can be employed herein are the active non-metallic halides and metallic halides.

Suitable non-metallic halides are represented by the formula R'X wherein R' is hydrogen or an active monovalent organic radical and X is a halogen. Particularly suitable non-metallic halides include, for example, hydrogen halides and active organic halides such as t-alkyl halides, allyl halides, benzyl halides and other active hydrocarbyl halides wherein hydrocarbyl is as defined hereinbefore. By an active organic halide is meant a hydrocarbyl halide that contains a labile halogen at least as active, i.e., as easily lost to another compound, as the halogen of sec-butyl chloride, preferably as active as that of t-butyl chloride. In addition to the organic monohalides, it is understood that organic dihalides, trihalides and other polyhalides that are active as defined hereinbefore are also suitably employed. Examples of preferred active non-metallic halides include hydrogen chloride, hydrogen bromide, t-butyl chloride, t-amyl bromide, allyl chloride, benzyl chloride, crotyl chloride, methylvinyl carbinyl chloride, α-phenylethyl bromide and diphenyl methyl chloride. Most preferred are hydrogen chloride, t-butyl chloride, allyl chloride and benzyl chloride.

The metallic halides which can be employed herein are aluminum halides of the formula $AlR_{3-a}X_a$ wherein each R is independently hydrocarbyl as hereinbefore defined such as alkyl, X is a halogen and a is a number from 1 to 3. Most preferred are alkylaluminum halides such as ethylaluminum sesquichloride, diethylaluminum chloride, ethylaluminum dichloride (EADC), and diethylaluminum bromide, with ethylaluminum dichloride being especially preferred. Alternatively, a metal halide such as aluminum trichloride or a combination of aluminum trichloride with an alkyl aluminum halide or a trialkyl aluminum compound may be suitable employed.

It is understood that the organic moieties of the aforementioned organomagnesium, e.g., R'', and the

organic moieties of the halide source, e.g., R and R', are suitably any other organic radical provided that they do not contain functional groups that poison conventional Ziegler catalysts.

The magnesium halide can be preformed from the organomagnesium compound and the halide source or it can be formed insitu in which instance the catalyst is preferably prepared by mixing in a suitable solvent or reaction medium (1) the organomagnesium component and (2) the halide source, followed by the other catalyst components.

Suitable aliphatic and aromatic hydroxyl-containing compounds which can be employed herein include, for example, those represented by the following formulas

I. 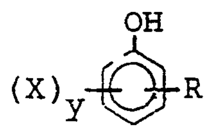

II. 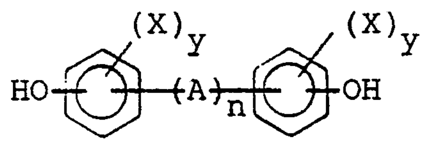

III. 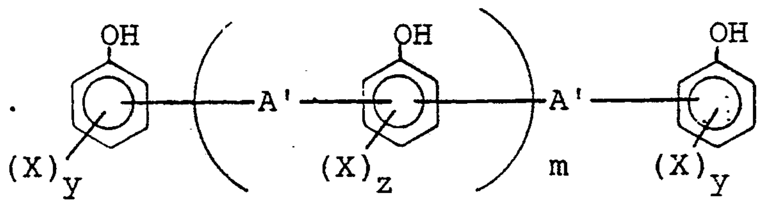

IV. 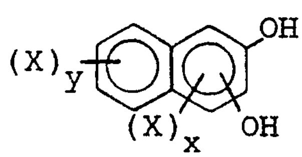

V. 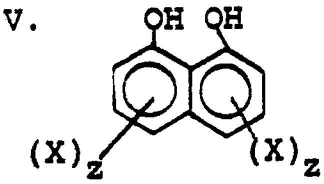

VI. 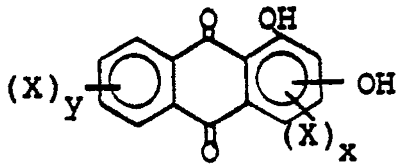

VII. 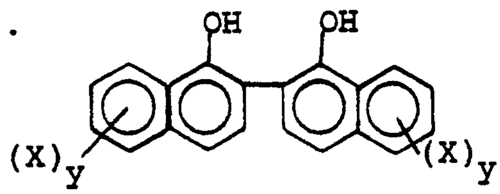

VIII. 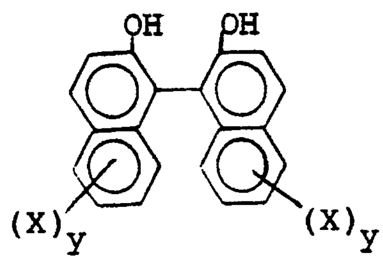

IX. 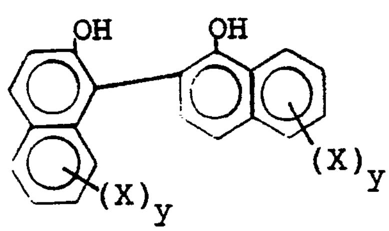

wherein each A is independently a divalent hydrocarbyl group having from 1 to 10, preferably from 1 to 4, carbon atoms, -O-, -S-, -S-S-,

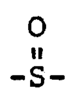, 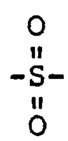, 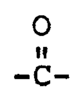

or

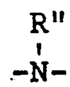;

each A' is independently a divalent hydrocarbyl group having from 1 to 10, preferably from 1 to 4, carbon atoms; each R is independently -OH,

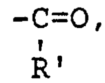

or a hydroxyl substituted hydrocarbyl or a hydroxyl substituted hydrocarbyloxy group having from 1 to 20, preferably from 1 to 10 carbon atoms; each R' is independently hydrogen, hydroxyl or a hydrocarbyl or hydrocarbyloxy group having from 1 to 10, preferably from 1 to 6, carbon atoms; each R'' is independently hydrogen or a hydrocarbyl group having from 1 to 10, preferably from 1 to 6, carbon atoms; each X is independently a hydroxyl group, a nitro group, a nitrile group, a hydrocarbyl group, a hydrocarbyloxy group, a hydroxyl substituted hydrocarbyl or a hydroxyl substituted hydrocarbyloxy group each such groups having from 1 to 20, preferably from 1 to 12, carbon atoms or a halogen; m has an average value of from 0.01 to 6, preferably from 1 to 3; each n independently has a value of zero or 1; each x independently has a value of from zero to 2; each y independently has a value of from zero to 4; preferably from 1 to 2 and z has a value of from zero to 3, preferably from 1 to 2.

X. 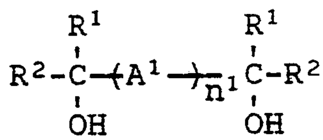

XI. 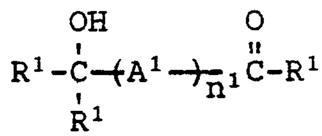

XII. 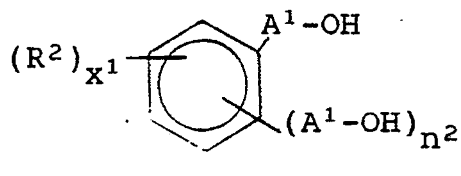

XIII. 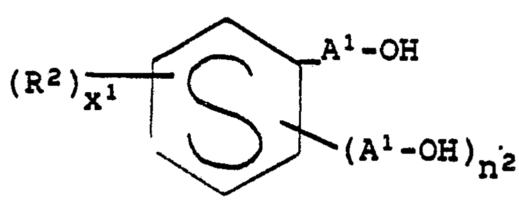

XIV. 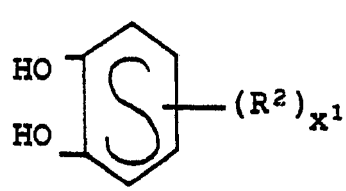

wherein each $A^1$ is independently a divalent hydrocarbyl group having from 1 to 10, preferably from 1 to 4, carbon atoms; each $R^1$ is independently hydrogen, a hydrocarbyl group or a halogen, nitro or hydrocarbyloxy substituted hydrocarbyl group, each such hydrocarbyl or hydrocarbyloxy groups having from 1 to 20, preferably from 1 to 10 carbon atoms; each $R^2$ is independently hydrogen, a halogen atom, a hydrocarbyl group, a hydrocarbyloxy group or a halogen, nitro or hydrocarbyloxy substituted hydrocarbyl group or a halogen, nitro or hydrocarbyloxy substituted hydrocarbyloxy group, each such hydrocarbyl or hydrocarbyloxy group having from 1 to 20, preferably from 1 to 10 carbon atoms; each $n^1$ is independently zero or 1; each $n^2$ has a value of from 1 to 5, preferably from 1 to 2, and each $x^1$ independently has a value of from zero to 4.

Particularly suitable compounds containing at least one phenolic hydroxyl group which can be employed herein include, for example, catechol, resorcinol, bisphenol A, 4-t-butylcatechol, bis-(hydroxyphenyl)methane, 4-t-octylcatechol, 3-isopropylcatechol, 3-isopropyl-6-methylcatechol, 3,5-di-t-butylcatechol, 3-methoxycatechol, o,o'-bisphenol, alizarin, 2,3-dihydroxy naphthalene, salicylaldehyde, o-hydroxy acetophenone, o-hydroxy benzophenone, 3,4-dihydroxy benzaldehyde, 1,1'-bi-2-naphthol, 3-methoxy salicylaldehyde and mixtures thereof.

Particularly suitable compounds containing at least one aliphatic hydroxyl group which can be employed herein include, for example, 1,2-dihydroxyoctane, d,1-benzoin, 1,2-benzenedimethanol, cis-1,2-cyclohexanedimethanol, 1,2-butanediol, 1,3-dihydroxypropane and mixtures thereof.

Mixtures of the aforementioned aromatic hydroxyl-containing and aliphatic hydroxyl-containing compounds can also be employed.

The compound or complex formed from reacting said titanium and/or vanadium component and said component having at least one hydroxyl group per molecule can be utilized as formed or the product can be isolated and then utilized at the appropriate place in the catalyst preparation.

When it is desired to prepare complexes employing molar ratios of titanium and/or vanadium compound to hydroxyl-containing compound of about 1 to 1, it is preferred to add the hydroxyl-containing compound to the titanium and/or vanadium compound.

When it is desired to prepare complexes employing molar ratios of titanium and/or vanadium compound to hydroxyl-containing compound of about 1 to 2, it is preferred to add the titanium and/or vanadium compound to the hydroxyl-containing compound.

Regardless of the molar ratios employed, when it is desired to prepare a complex containing mixed ligands by employing different hydroxyl-containing compounds, it is preferred to add the hydroxyl-containing compounds to the titanium and/or vanadium compound wherein the most acidic hydroxyl-containing compound is added first.

When the titanium compound and/or vanadium compound and hydroxyl-containing compounds are prereacted, temperatures from 0 °C to 200 °C, preferably from 20 °C to 100 °C, can be employed.

The aforementioned vanadium complexes are represented by formula XV as follows:

XV. QQ'VO

wherein Q is a ligand represented by formulas XVI-XIX and Q' is a halide or a hydrocarbyloxy group having from 1 to 20 carbon atoms.

Formulas XVI-XIX are as follows:

XVI.

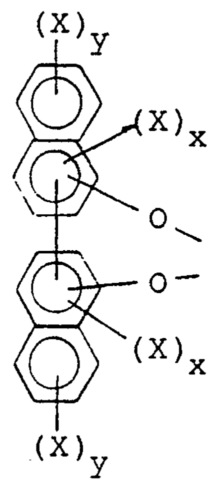

XVII. 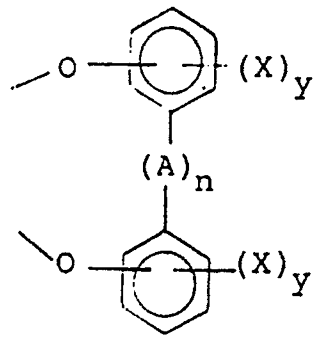

XVIII. 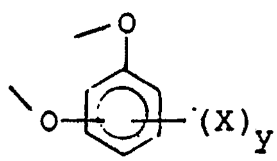

XIX. 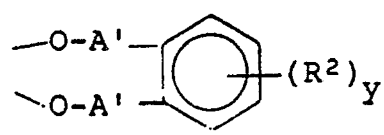

wherein A, A', $R^2$, X, n, x and y are as defined above.

The foregoing catalyst components are combined in proportions sufficient to provide atomic ratios as previously mentioned.

In cases wherein neither the organomagnesium component nor the halide source contains aluminum or contains an insufficient quantity of aluminum, it is necessary to include in the total catalyst an aluminum compound such as an alkyl aluminum compound, e.g., a trialkyl aluminum, an alkyl aluminum halide or an aluminum halide. If polymerization temperatures below 180°C are employed, the atomic ratios of Al:Ti may be from 0.1:1 to 2000:1, preferably from 1:1 to 200:1. However, when polymerization temperatures above 180°C are employed, the aluminum compound is used in proportions such that the Al:Ti ratio is less than 120:1, preferably less than 50:1. It is understood, however, that the use of very low amounts of aluminum necessitates the use of high purity solvents or diluents in the polymerization Zone. Further, other components present in the zone should be essentially free of impurities which react with aluminum alkyls. Otherwise, additional quantities of an organometallic compound as previously described, preferably an organoaluminum compound, must be used to react with such impurities. Moreover, it is understood that in the catalyst the aluminum compound should be in the form of trialkyl aluminum or alkyl aluminum halide provided that the alkyl aluminum halide be substantially free of alkyl aluminum dihalide. In the above mentioned aluminum compounds, the alkyl groups independently have from 1 to 20, preferably from 1 to 10 carbon atcms.

When additional quantities of aluminum compound are employed, it can be added to the aforementioned catalyst during the preparation thereof or the aluminum deficient catalyst can be mixed with the appropriate aluminum compound prior to entry into the polymerization reactor or, alternatively, the aluminum deficient catalyst and the aluminum compound can be added to the polymerization reactor as separate streams or additions.

The foregoing catalytic reaction is preferably carried out in the presence of an inert diluent. The

concentrations of catalyst components are preferably such that when the essential components of the catalytic reaction product are combined, the resultant slurry is from 0.005 to 1.0 molar (moles/liter) with respect to magnesium. By way of an example of suitable inert organic diluents can be mentioned liquified ethane, propane, isobutane, n-butane, n-hexane, the various isomeric hexanes, isooctane, paraffinic mixtures of alkanes having from 8 to 12 carbon atoms, cyclohexane, methylcyclopentane, dimethylcyclohexane, dodecane, industrial solvents composed of saturated or aromatic hydrocarbons such as kerosene, naphthas, etc., especially when free of any olefin compounds and other impurities, and especially those having boiling points in the range from -50° to 200°C. Also included as suitable inert diluents are benzene, toluene, ethylbenzene, cumene, decalin and the like.

Mixing of the catalyst components to provide the desired catalytic reaction product is advantageously carried out under an inert atmosphere such as nitrogen, argon or other inert gas at temperatures in the range from -100° to 200°C, preferably from 0° to 100°C. The period of mixing is not considered to be critical as it is found that a sufficient catalyst composition most often occurs within 1 minute or less. In the preparation of the catalytic reaction product, it is not necessary to separate hydrocarbon soluble components from hydrocarbon insoluble components of the reaction product.

While the catalysts can be prepared by adding the components in essentially any order, it is preferred to add the components in one of the following orders:

1. (A, B, C and D prereacted), F, E.
2. A, B, C, D, F, E.
3. A, B, C, F, D, E.
4. A, B, F, C, D, E.
5. (A and B prereacted), C, D, F, E.
6. (A, B and C prereacted), D, F, E.
7. A, B (C and D prereacted), F, E.
8. (A, B and F prereacted), C, D, E.

In the polymerization process employing the aforementioned catalytic reaction product, polymerization is effected by adding a catalytic amount of the above catalyst composition to a polymerization zone containing α-olefin monomer, or vice versa. Any polymerization method can be employed including slurry, solution, gas phase, high pressure process, and the like. The polymerization zone is usually maintained at temperatures in the range from 0° to 300°C, preferably at solution polymerization temperatures, e.g., from 130° to 250°C, for a residence time of a few seconds to several days, preferably 15 seconds to 2 hours (7200 s). It is generally desirable to carry out the polymerization in the absence of moisture and oxygen and a catalytic amount of the catalytic reaction product is generally within the range from 0.0001 to 0.1 millimoles titanium per liter of diluent. It is understood, however, that the most advantageous catalyst concentration will depend upon polymerization conditions such as temperature, pressure, solvent and presence of catalyst poisons and that the foregoing range is given to obtain maximum catalyst yields in weight of polymer per unit weight of titanium. Generally, in the polymerization process, a carrier which may be an inert organic diluent or solvent or excess monomer is employed. In order to realize the full benefit of the high efficiency catalyst of the present invention, care must be taken to avoid oversaturation of the solvent with polymer. If such saturation occurs before the catalyst becomes depleted, the full efficiency of the catalyst is not realized. For best results, it is preferred that the amount of polymer in the carrier not exceed about 50 weight percent based on the total weight of the reaction mixture.

It is understood that inert diluents employed in the polymerization recipe are suitable as defined hereinbefore.

The polymerization pressures preferably employed are relatively low, e.g., from 5 to 10,000 psig (0.034-68.9 MPa), preferably from 50 to 1000 psig, (0.345-6.89 MPa), most preferably from 100 to 700 psig (0.689-4.8 MPa). However, polymerization within the scope of the present invention can occur at pressures from atmospheric up to pressures determined by the capabilities of the polymerization equipment, which can include pressures up to 50,000 psig (344.5 MPa). During polymerization it is desirable to stir the polymerization recipe to obtain better temperature control and to maintain uniform polymerization mixtures throughout the polymerization zone.

In order to optimize catalyst yields in the polymerization of ethylene under solution conditions, it is preferable to maintain an ethylene concentration in the solvent in the range of from 1 to 10 weight percent, most advantageously from 1.2 to 2 weight percent. To achieve this, when an excess of ethylene is fed into the system, a portion of the ethylene can be vented. In other processes, it is preferred to conduct the polymerization in an excess of the α-olefin being polymerized in order to optimize catalyst yields.

Hydrogen can be employed in the practice of this invention to control the molecular weight of the resultant polymer. For the purpose of this invention, it is beneficial to employ hydrogen in concentrations

ranging from 0.001 to 1 mole per mole of monomer. The larger amounts of hydrogen within this range are found to produce generally lower molecular weight polymers. It is understood that hydrogen can be added with a monomer stream to the polymerization vessel or separately added to the vessel before, during or after addition of the monomer to the polymerization vessel, but during or before the addition of the catalyst.

The monomer or mixture of monomers is contacted with the catalytic reaction product in any conventional manner, preferably by bringing the catalytic reaction product and monomer together with intimate agitation provided by suitable stirring or other means. Agitation can be continued during polymerization, or in some instances, the polymerization mixture can be allowed to remain unstirred while the polymerization takes place. In the case of more rapid reactions with more active catalysts, means can be provided for refluxing monomer and solvent, if any of the latter is present, in order to remove the heat of reaction. In any event, adequate means should be provided for dissipating the exothermic heat of polymerization. If desired, the monomer can be brought in the vapor phase into contact with the catalytic reaction product, in the presence or absence of liquid material. The polymerization can be effected in the batch manner, or in a continuous manner, such as, for example, by passing the reaction mixture through an elongated reaction tube which is contacted externally with suitable cooling media to maintain the desired reaction temperature, or by passing the reaction mixture through an equilibrium overflow reactor or a series of the same.

The polymer is readily recovered from the polymerization mixture by driving off unreacted monomer and solvent if any is employed. No further removal of impurities is required. Thus, a significant advantage of the present invention is the elimination of the catalyst residue removal steps. In some instances, however, it may be desirable to add a small amount of a catalyst deactivating reagent of the types conventionally employed for deactivating Ziegler catalysts. The resul-tant polymer is found to contain insignificant amounts of catalyst residue and to possess a relatively narrow molecular weight distribution.

The following examples are given to illustrate the invention. All percentages are by weight and all parts are by molar or atomic ratio unless otherwise indicated.

In the following examples, the melt index values $I_2$ and $I_{10}$ were determined by ASTM D 1238-70 and the density values were determined by ASTM D 1248.

## EXAMPLES

The position of ring substituents employed herein are in accordance with the Definitive Rules For Nomenclature of Organic Chemistry as provided in the Handbook of Chemistry and Physics, 50th Ed., Chemical Rubber Co., page C-1 et seq.

### Preparation of Complexes

The new vanadium complexes were prepared by mixing stock solutions (0.015 molar) of the vanadium source, vanadium oxytrichloride ($VOCl_3$) or vanadium oxytriisopropoxide $(VO)(Oipr)_3$, and the aromatic hydroxyl and aliphatic hydroxyl ligands in the desired ratio. The ratio (L/M) of moles ligand (L) to moles of vanadium in the vanadium source (M) utilized to prepare the desired complexes employed in the following examples is shown under the column heading L/M. The various solutions were prepared at ambient temperatures by diluting the vanadium source and/or ligand with Isopar® E (an isoparaffinic hydrocarbon fraction having a boiling range of 116°-134°C) to the desired volume to produce 0.015 molar solutions. These solutions were stored under a nitrogen atmosphere to prevent decomposition.

### Preparation of Catalyst Compositions

#### 1. Preparation of Anhydrous $MgCl_2$

To 18.52 ml of 1.06 molar dibutyl magnesium, was added 71.48 ml of Isopar® E. Anhydrous electronic grade HCl was passed through the solution until all of the magnesium alkyl had been converted to magnesium chloride. Excess HCl was stripped from the slurry by purging with dry $N_2$. The resulting slurry (0.2 molar) of $MgCl_2$ in Isopar® E (IPE) was stored under a nitrogen atmosphere and utilized as a stock solution in the preparation of catalyst compositions.

#### 2. Catalyst Compositions

The catalyst compositions were prepared by adding with stirring under a nitrogen atmosphere to a 4-

ounce (118.3 cc) serum bottle the following components in the indicated order. Components were stirred for a minimum of 8 hours (28,800 s) prior to the addition of the next component.

Catalyst Preparation Type A

100 ml 0.2 M $MgCl_2$ in IPE
A ml of 1.5 M EADC if required
B ml of neat Ti complex (Tipt or $TiCl_4$)
C ml of neat V complex if required ($VOCl_3$;
$VO(OiPr)_3$; or $VCl_4$) D moles of neat ligand if required
18.32-(A+B+C) ml IPE

Catalyst Preparation Type B

100 ml 0.2 M $MgCl_2$ in IPE
A ml of 1.5 M EADC if required
C ml of neat V complex if required ($VOCl_3$; $Vo(oipr)_3$; or $VCl_4$)
B ml of neat Ti complex (Tipt or $TiCl_4$)
D moles of neat ligand if required
18.32-(A+B+C) ml IPE

Catalyst Preparation Type C

100 ml 0.2 M $MgCl_2$ in IPE
A ml of 1.5 M EADC if required
C ml of neat V complex if required ($VOCl_3$; $Vo(oipr)_3$; or $VCl_4$)
D moles of neat ligand if required
B ml of neat Ti complex (Tipt or $TiCl_4$)
18.32-(A+B+C) ml IPE

Catalyst Preparation Type D

100 ml 0.2 M $MgCl_2$ in IPE
C ml of neat V complex if required ($VOCl_3$; $Vo(oipr)_3$; or $VCl_4$)
A ml of 1.5 M EADC if required
B ml of neat Ti complex (Tipt or $TiCl_4$)
D moles of neat ligand if required
18.32-(A+B+C) ml IPE

Catalyst Preparation Type E

100 ml 0.2 M $MgCl_2$ in IPE
A ml of 1.5 M EADC if required
B ml of neat Ti complex (Tipt or $TiCl_4$)
D moles of neat ligand if required
C ml of neat V complex if required ($VOCl_3$; $VO(OiPr)_3$ or $VCl_4$)
18.32-(A+B+C) ml IPE

Catalyst Preparation Type F

50-(B+C) ml IPE
3.67 ml of Catalyst Type A, B, C, D or E as indicated in the Table
B ml of 0.015 M V compound in IPE
C ml of 0.15 M triethylaluminum

POLYMERIZATION CONDITION

General Procedure

A stirred, 1 gallon (3.79 l) batch reactor containing 2 liters of Isopar® E and 300 ml of octene-1 was heated to the desired temperature of 195 °C and the solvent/monomer vapor pressure recorded. To this was added 0-10 psig (0.1-0.1689 MPa) of hydrogen and the ethylene was added to give the desired final reactor pressure of 450 psig (3.2 MPa). An amount of the above catalyst as described under catalyst preparation was injected into the reactor and the reactor pressure and temperature were maintained constant at the desired final pressure and temperature by continually feeding ethylene during the polymerization run and controlling the temperature with cooling. The total reaction time was 15 minutes (900 s). The resulting copolymer properties are given in the following Table I and Table II.

TABLE I

| COMPARATIVE EXPERIMENT LETTER OR EXAMPLE # | CATALYST TYPE AND VOLUMES | VOLUMES OF CATALYST F | $I_2$ | $I_{10}$ | RATIO OF Mg/Al/Cl/V/Ti | LIGAND | $H_2$ psig (MPa) |
|---|---|---|---|---|---|---|---|
| 1 | A wherein A=0; B=0.055 $TiCl_4$; C=0.053 $VCl_4$; D=0 | B=0; C=1 | 0.52 | 6.52 | 40/10/88/1/1 | --- | 5 (0.14) |
| 2 | A wherein A=0; B=0.055 $TiCl_4$; C=0.053 $VCl_4$; D=0 | B=0; C=1 | 0.069 | 6.52 | 40/10/88/1/1 | --- | 0 (0.10) |
| 3 | A wherein A=0; B=0.055 $TiCl_4$; C=0.053 $VCl_4$; D=0 | B=0; C=1 | 1.27 | 6.42 | 40/10/88/1/1 | --- | 10 (0.17) |
| A | A wherein A=0; B=0.055 $TiCl_4$; C=0; D=0 | B=0; C=1 | 0.47 | 10 | 40/10/84/0/1 | --- | 0 (0.10) |
| B | E wherein A=0; B=0.055 $TiCl_4$; D=0.0005; C=0 | B=0; C=0.8 | 0.64 | 7.66 | 40/8/84/0/1 | I, OH's are para, R=t-butyl | 0 |
| C | E wherein A=0; B=0.055 $TiCl_4$; D=0.0005; C=0 | B=0; C=0.8 | 0.83 | 8.29 | 40/8/84/0/1 | I, OH's are para, R=t-butyl | 5 |

TABLE I (Cont.)

| COMPARATIVE EXPERIMENT LETTER OR EXAMPLE # | CATALYST TYPE AND VOLUMES | VOLUMES OF CATALYST F | $I_2$ | $I_{10}$ | RATIO OF Mg/Al/Cl/V/Ti | LIGAND | $H_2$ psig (MPa) |
|---|---|---|---|---|---|---|---|
| 4 | E wherein A=0; B=0.055 $TiCl_4$; D=0.0005; C=0.053 $VCl_4$ | B=0; C=1 | 0.08 | 7.13 | 40/10/88/1/1 | I, OH's are para, R=t-butyl | 0 (0.10) |
| 5 | E wherein A=0; B=0.055 $TiCl_4$; D=0.0005; C=0.053 $VCl_4$ | B=0; C=1 | 0.61 | 8 | 40/10/88/1/1 | I, OH's are para, R=t-butyl | 5 (0.14) |
| D | E wherein A=0; B=0.055 $TiCl_4$; D=0.0005; C=0 | B=0; C=1 | 0.13 | 10 | 40/10/84/0/1 | VIII, y=0 | 0 (0.10) |
| E | E wherein A=0; B=0.055 $TiCl_4$; D=0.0005; C=0 | B=0; C=1 | 0.67 | 8.25 | 40/10/84/0/1 | VIII, y=0 | 5 (0.14) |
| F | E wherein A=0; B=0.055 $TiCl_4$; D=0.0005; C=0 | B=0; C=1 | 1.5 | 8.11 | 40/10/84/0/1 | VIII, y=0 | 10 (0.17) |
| 6 | E wherein A=0; B=0.055 $TiCl_4$; D=0.0005; C=0.053 $VCl_4$ | B=0; C=1 | 0.13 | 6.77 | 40/10/88/1/1 | VIII, y=0 | 0 (0.10) |

TABLE I (Cont.)

| COMPARATIVE EXPERIMENT LETTER OR EXAMPLE # | CATALYST TYPE AND VOLUMES | VOLUMES OF CATALYST F | $I_2$ | $I_{10}$ | RATIO OF Mg/Al/Cl/V/Ti | LIGAND | $H_2$ psig (MPa) |
|---|---|---|---|---|---|---|---|
| 7 | E wherein A=0; B=0.055 $TiCl_4$; D=0.0005; C=0.053 $VCl_4$ | B=0; C=1 | 0.48 | 7.98 | 40/10/88/1/1 | VIII, y=0 | .5 (0.14) |
| 8 | E wherein A=0; B=0.055 $TiCl_4$; D=0.0005; C=0.053 $VCl_4$ | B=0; C=1.5 | 0.1 | 8.6 | 40/15/88/1/1 | I, OH's are ortho, R=4-t-butyl | 0 (0.10) |
| 9 | E wherein A=0; B=0.055 $TiCl_4$; D=0.0005; C=0.053 $VCl_4$ | B=0; C=1.5 | 0.97 | 6.3 | 40/15/88/1/1 | I, OH's are ortho, R=4-t-butyl | 5 (0.14) |
| G | E wherein A=0; B=0.055 $TiCl_4$; D=0.0005; C=0 | B=0; C=1.5 | 0.53 | 9.96 | 40/15/84/0/1 | I, OH's are ortho, R=4-t-butyl | 0 (0.10) |
| 10 | E wherein A=0; B=0.055 $TiCl_4$; D=0; C=0.047 $VOCl_3$ | B=0; C=1 | 0.149 | 7.85 | 40/10/87/1/1 | --- | 0 (0.10) |

TABLE I (Cont.)

| COMPARATIVE EXPERIMENT LETTER OR EXAMPLE # | CATALYST TYPE AND VOLUMES | VOLUMES OF CATALYST F | $I_2$ | $I_{10}$ | RATIO OF Mg/Al/Cl/V/Ti | LIGAND | $H_2$ psig (MPa) |
|---|---|---|---|---|---|---|---|
| 11 | E wherein A=0; B=0.055 $TiCl_4$; D=0; C=0.047 $VOCl_3$ | B=0; C=1 | 1.02 | 6.1 | 40/10/87/1/1 | --- | 5 (0.14) |
| 12 | E wherein A=0; B=0.055 $TiCl_4$; D=0.0005; C=0.047 $VOCl_3$ | B=0; C=1 | 0.13 | 4.85 | 40/10/87/1/1 | I, OH's are para, R=t-butyl | 0 (0.10) |
| 13 | E wherein A=0; B=0.055 $TiCl_4$; D=0.0005; C=0.047 $VOCl_3$ | B=0; C=1 | 0.46 | 7.65 | 40/10/87/1/1 | I, OH's are para, R=t-butyl | 5 (0.14) |
| 14 | E wherein A=0; B=0.055 $TiCl_4$; D=0.0005; C=0.047 $VOCl_3$ | B=0; C=1 | 0.87 | 8.38 | 40/10/87/1/1 | I, OH's are para, R=t-butyl | 10 (0.17) |
| H | E wherein A=0; B=0.165 $TiCl_4$; D=0.0015; C=0 | B=0; C=1.5 | 0.85 | 8.8 | 40/15/92/0/1 | I, OH's are ortho, R=4-t-butyl | 0 (0.10) |

TABLE I (Cont.)

| COMPARATIVE EXPERIMENT LETTER OR EXAMPLE # | CATALYST TYPE AND VOLUMES | VOLUMES OF CATALYST F | $I_2$ | $I_{10}$ | RATIO OF Mg/Al/Cl/V/Ti | LIGAND | $H_2$ psig (MPa) |
|---|---|---|---|---|---|---|---|
| 15 | E wherein A=0; B=0.165 $TiCl_4$; D=0.0015; C=0.141 $VOCl_3$ | B=0; C=1.5 | 0.25 | 7 | 40/15/101/3/3 | I, OH's are ortho, R=4-t-butyl | 0 (0.10) |
| 16 | E wherein A=0; B=0.165 $TiCl_4$; D=0.0015; C=0.141 $VOCl_3$ | B=0; C=1.5 | 0.88 | 8.1 | 40/15/101/3/3 | I, OH's are ortho, R=4-t-butyl | 5 (0.14) |
| I | E wherein A=0; B=0.165 $TiCl_4$; D=0.0015; C=0 | B=0; C=1 | 0.17 | 9.06 | 40/10/92/0/3 | VIII, y=0 | 0 (0.10) |
| J | E wherein A=0; B=0.165 $TiCl_4$; D=0.0015; C=0 | B=0; C=1 | 0.78 | 7.17 | 40/10/92/0/3 | VIII, y=0 | 5 (0.14) |
| 17 | E wherein A=0; B=0.165 $TiCl_4$; D=0.0015; C=0.141 $VOCl_3$ | B=0; C=1.2 | 0.11 | 8.73 | 40/12/101/3/3 | VIII, y=0 | 0 (0.10) |

TABLE I (Cont.)

| COMPARATIVE EXPERIMENT LETTER OR EXAMPLE # | CATALYST TYPE AND VOLUMES | VOLUMES OF CATALYST F | $I_2$ | $I_{10}$ | RATIO OF Mg/Al/Cl/V/Ti | LIGAND | $H_2$ psig (MPa) |
|---|---|---|---|---|---|---|---|
| 18 | E wherein A=0; B=0.165 $TiCl_4$; D=0.0015; C=0.141 $VOCl_3$ | B=0; C=1.2 | 1.09 | 7.14 | 40/12/101/3/3 | VIII, y=0 | 5 (0.14) |
| 19 | E wherein A=0; B=0.165 $TiCl_4$; D=0.0015; C=0.282 $VOCl_3$ | B=0; C=1.2 | 0.28 | 8.61 | 40/12/110/6/3 | VIII, y=0 | 0 (0.10) |
| 20 | E wherein A=0; B=0.165 $TiCl_4$; D=0.0015; C=0.282 $VOCl_3$ | B=0; C=1.2 | 0.86 | 8.23 | 40/12/110/6/3 | VIII, y=0 | 5 (0.14) |
| 21 | E wherein A=0; B=0.055 $TiCl_4$; D=0.0005; C=0.106 $VCl_4$ | B=0; C=1.2 | 0.14 | 9.64 | 40/12/92/2/1 | VIII, y=0 | 0 (0.10) |
| 22 | E wherein A=0; B=0.055 $TiCl_4$; D=0.0005; C=0.106 $VCl_4$ | B=0; C=1.2 | 0.93 | 7.78 | 40/12/92/2/1 | VIII, y=0 | 5 (0.14) |

TABLE I (Cont.)

| COMPARATIVE EXPERIMENT LETTER OR EXAMPLE # | CATALYST TYPE AND VOLUMES | VOLUMES OF CATALYST F | $I_2$ | $I_{10}$ | RATIO OF Mg/Al/Cl/V/Ti | LIGAND | $H_2$ psig (MPa) |
|---|---|---|---|---|---|---|---|
| 23 | E wherein A=0; B=0.055 $TiCl_4$; D=0; C=0.047 $VOCl_3$ | B=0; C=1 | 0.149 | 7.85 | 40/10/87/1/1 | --- | 0 (0.10) |
| 24 | E wherein A=0; B=0.055 $TiCl_4$; D=0; C=0.047 $VOCl_3$ | B=0; C=1 | 1.02 | 6.1 | 40/10/87/1/1 | --- | 0 (0.10) |
| 25 | E wherein A=0; B=0.055 $TiCl_4$; D=0.0005; C=0.047 $VOCl_3$ | B=0; C=1 | 0.13 | 4.85 | 40/10/87/1/1 | I, OH's are para, R=t-butyl | 0 (0.10) |
| 26 | E wherein A=0; B=0.055 $TiCl_4$; D=0.0005; C=0.047 $VOCl_3$ | B=0; C=1 | 0.46 | 7.65 | 40/10/87/1/1 | I, OH's are para, R=t-butyl | 5 (0.14) |
| 27 | E wherein A=0; B=0.055 $TiCl_4$; D=0.0005; C=0.047 $VOCl_3$ | B=0; C=1 | 0.87 | 8.38 | 40/10/87/1/1 | I, OH's are para, R=t-butyl | 10 (0.17) |

TABLE I (Cont.)

| COMPARATIVE EXPERIMENT LETTER OR EXAMPLE # | CATALYST TYPE AND VOLUMES | VOLUMES OF CATALYST F | $I_2$ | $I_{10}$ | RATIO OF Mg/Al/Cl/V/Ti | LIGAND | $H_2$ psig (MPa) |
|---|---|---|---|---|---|---|---|
| K | E wherein A=0; B=0.165 $TiCl_4$; D=0.0015; C=0 | B=0; C=1.5 | 0.85 | 8.8 | 40/15/92/0/3 | I, OH's are ortho; R=4-t-butyl | 0 (0.10) |
| 28 | E wherein A=0; B=0.165 $TiCl_4$; D=0.0015; C=0.141 $VOCl_3$ | B=0; C=1.5 | 0.25 | 7 | 40/15/101/3/3 | I, OH's are ortho, R=4-t-butyl | 0 (0.10) |
| 29 | E wherein A=0; B=0.165 $TiCl_4$; D=0.0015; C=0.141 $VOCl_3$ | B=0; C=1.5 | 0.88 | 8.1 | 40/15/101/3/3 | I, OH's are ortho, R=4-t-butyl | 5 (0.14) |
| L | E wherein A=0; B=0.165 $TiCl_4$; D=0.0015; C=0 | B=0; C=0.9 | 0.045 | 11.33 | 40/9/92/0/3 | I, OH's are para, R=t-butyl | 0 (0.10) |
| M | E wherein A=0; B=0.165 $TiCl_4$; D=0.0015; C=0 | B=0; C=0.9 | 0.47 | 7.34 | 40/9/92/0/3 | I, OH's are para, R=t-butyl | 5 (0.14) |

TABLE I (Cont.)

| COMPARATIVE EXPERIMENT LETTER OR EXAMPLE # | CATALYST TYPE AND VOLUMES | VOLUMES OF CATALYST F | $I_2$ | $I_{10}$ | RATIO OF Mg/Al/Cl/V/Ti | LIGAND | $H_2$ psig (MP) |
|---|---|---|---|---|---|---|---|
| N | E wherein A=0; B=0.165 $TiCl_4$; D=0.0015; C=0 | B=0; C=0.9 | 1.14 | 7.4 | 40/9/92/0/3 | I, OH's are para, R=t-butyl | 10 (0.17) |
| O | E wherein A=0; B=0.165 $TiCl_4$; D=0; C=0 | B=0; C=1 | 0.52 | 8.63 | 40/10/92/0/3 | --- | 0 (0.10) |
| 30 | E wherein A=0; B=0.165 $TiCl_4$; D=0; C=0.141 $VOCl_3$ | B=0; C=1 | 0.24 | 9.38 | 40/10/101/3/3 | --- | 0 (0.10) |
| 31 | E wherein A=0; B=0.165 $TiCl_4$; D=0; C=0.141 $VOCl_3$ | B=0; C=1 | 0.85 | 7.86 | 40/10/101/3/3 | --- | 5 (0.14) |
| 32 | E wherein A=0; B=0.165 $TiCl_4$; D=0.015; C-0.141 $VOCl_3$ | B=0; C=1.2 | 0.064 | 10.6 | 40/12/101/3/3 | I, OH's are para, R=t-butyl | 0 (0.10) |

TABLE I (Cont.)

| COMPARATIVE EXPERIMENT LETTER OR EXAMPLE # | CATALYST TYPE AND VOLUMES | VOLUMES OF CATALYST F | $I_2$ | $I_{10}$ | RATIO OF Mg/Al/Cl/V/Ti | LIGAND | $H_2$ psig (MPa) |
|---|---|---|---|---|---|---|---|
| 33 | E wherein A=0; B=0.165 $TiCl_4$; D=0.015; C=0.141 $VOCl_3$ | B=0; C=1.2 | 0.805 | 7.18 | 40/12/101/3/3 | I, OH's are para, R=t-butyl | 5 (0.14) |
| 33 | E wherein A=0; B=0.165 $TiCl_4$; D=0; C=0.282 $VOCl_3$ | B=0; C=1.2 | 0.37 | 7.65 | 40/12/110/6/3 | --- | 0 (0.10) |
| 34 | E wherein A=0; B=0.165 $TiCl_4$; D=0; C=0.282 $VOCl_3$ | B=0; C=1.2 | 1.02 | 8.16 | 40/12/110/6/3 | --- | 5 (0.14) |
| 35 | E wherein A=0; B=0.165 $TiCl_4$; D=0.0015; C=0.282 $VOCl_3$ | B=0; C=1.5 | 0.55 | 8.65 | 40/15/110/6/3 | I, OH's are ortho, R=4-t-butyl | 0 (0.10) |
| 36 | E wherein A=0; B=0.165 $TiCl_4$; D=0.0015; C=0.282 $VOCl_3$ | B=0; C=1.5 | 0.23 | 5.26 | 40/15/110/6/3 | I, OH's are para, R=t-butyl | 0 (0.10) |

TABLE I (Cont.)

| COMPARATIVE EXPERIMENT LETTER OR EXAMPLE # | CATALYST TYPE AND VOLUMES | VOLUMES OF CATALYST F | $I_2$ | $I_{10}$ | RATIO OF Mg/Al/Cl/V/Ti | LIGAND | $H_2$ psig (MPA) |
|---|---|---|---|---|---|---|---|
| 37 | E wherein A=0; B=0.165 $TiCl_4$; D=0.0015; C=0.282 $VOCl_3$ | B=0; C=1.5 | 0.8 | 7.81 | 40/15/110/6/3 | I, OH's are para, R=t-butyl | 5 (0.14) |
| 38 | E wherein A=0; B=0.055 $TiCl_4$; D=0; C=0.106 $VCl_4$ | B=0; C=1 | 0.116 | 9.22 | 40/10/92/2/1 | --- | 0 (0.10) |
| 39 | E wherein A=0; B=0.055 $TiCl_4$; D=0; C=0.106 $VCl_4$ | B=0; C=1 | 0.98 | 7.41 | 40/10/92/2/1 | --- | 5 (0.14) |
| 40 | E wherein A=0; B=0.055 $TiCl_4$; D=0.0005; C=0.106 $VCl_4$ | B=0; C=1.5 | 0.18 | 6.05 | 40/15/92/2/1 | I, OH's are ortho, R=4-t-butyl | 0 (0.10) |
| 41 | E wherein A=0; B=0.055 $TiCl_4$; D=0.0005; C=0.106 $VCl_4$ | B=0; C=1.5 | 0.63 | 9.54 | 40/15/92/2/1 | I, OH's are ortho, R=4-t-butyl | 5 (0.14) |

TABLE I (Cont.)

| COMPARATIVE EXPERIMENT LETTER OR EXAMPLE # | CATALYST TYPE AND VOLUMES | VOLUMES OF CATALYST F | $I_2$ | $I_{10}$ | RATIO OF Mg/Al/Cl/V/Ti | LIGAND | $H_2$ psig (MPa) |
|---|---|---|---|---|---|---|---|
| 42 | E wherein A=0; B=0.055 $TiCl_4$; D=0.0005; C=0.106 $VCl_4$ | B=0; C=1.2 | 0.15 | 5.6 | 40/12/92/2/1 | I, OH's are para, R=t-butyl | 0 (.10) |
| 43 | E wherein A=0; B=0.055 $TiCl_4$; D=0.0005; C=0.106 $VCl_4$ | B=0; C=1.2 | 0.49 | 8.37 | 40/12/92/2/1 | I, OH's are para, R=t-butyl | 5 (0.14) |
| 44 | E wherein A=0; B=0.055 $TiCl_4$; D=0.0005; C=0.106 $VCl_4$ | B=0; C=1.2 | 1.16 | 8.23 | 40/12/92/2/1 | I, OH's are para, R=t-butyl | 10 (0.17) |
| 45 | E wherein A=0; B=0.165 $TiCl_4$; D=0; C=0.159 $VCl_4$ | B=0; C=1.2 | 0.23 | 6.09 | 40/12/104/2/1 | --- | 0 (0.10) |
| 46 | E wherein A=0; B=0.165 $TiCl_4$; D=0; C=0.159 $VCl_4$ | B=0; C=1.2 | 0.68 | 8.49 | 40/12/104/2/1 | --- | 5 (0.14) |

TABLE II

| COMPARATIVE EXPERIMENT LETTER OR EXAMPLE # | CATALYST TYPE AND VOLUMES | VOLUMES OF CATALYST | $I_2$ | $I_{10}/I_2$ | RATIO OF Mg/Al/Cl/V/Ti | LIGAND | $H_2$ psig (MPa) | Mw/Mn |
|---|---|---|---|---|---|---|---|---|
| P | E wherein A=4; B=0.45 Tipt; D=0; C=0 | B=0; C=1.2 | 0.38 | 13.7 | 40/24/104/0/3 | --- | 0 (0.10) | 10.4 |
| 47 | B wherein A=4; C=0.159 $VCl_4$; B=0.45 Tipt; D=0 | B=0; C=2.4 | 0.52 | 5.11 | 40/36/116/3/3 | --- | 0 (0.10) | 9.01 |
| 48 | A wherein A=4; B=0.45 Tipt; C=0.159 $VCl_4$; D=0 | B=0; C=2.4 | 0.38 | 8.29 | 40/36/116/3/3 | --- | 0 (0.10) | 8.24 |
| 49 | A wherein A=4; B=0.45 Tipt; C=0.318 $VCl_4$; D=0 | B=0; C=2.4 | 0.32 | 8.5 | 40/36/128/3/3 | --- | 0 (0.10) | 8.77 |
| 50 | D wherein C=0.159 $VCl_4$; A=4; B=0.45 Tipt; D=0 | B=0; C=2.4 | 0.31 | 8.55 | 40/36/116/3/3 | --- | 0 (0.10) | 8.53 |

TABLE II (Cont.)

| COMPARATIVE EXPERIMENT LETTER OR EXAMPLE # | CATALYST TYPE AND VOLUMES | VOLUMES OF CATALYST | $I_2$ | $I_{10}/I_2$ | RATIO OF Mg/Al/Cl/V/Ti | LIGAND | $H_2$psig (MPa) | Mw/Mn |
|---|---|---|---|---|---|---|---|---|
| Q | A wherein A=4; B=0.45 Tipt; C=0; D=0 | B=3 $VCl_4$; C=2.4 | 0.22 | 11.45 | 40/36/116/3/3 | --- | 0 (0.10) | --- |
| R | A wherein A=4; B=0.45 Tipt; C=0; D=0 | B=6 $VCl_4$; C=2.4 | 0.36 | 8.69 | 40/36/128/3/3 | --- | 0 (0.10) | --- |
| 51 | B wherein A=4; C=0.141 $VOCl_3$; B=0.45 Tipt; D=0 | B=0; C=2.4 | 0.15 | 8.15 | 40/36/113/3/3 | --- | 0 (0.10) | --- |
| 52 | A wherein A=4; B=0.45 Tipt; C=0.141 $VOCl_3$; D=0 | B=0; C=3 | 0.28 | 9.89 | 40/42/113/3/3 | --- | 0 (0.10) | 10.2 |
| 53 | D wherein C=0.141 $VOCl_3$; A=4; B=0.45 Tipt; D=0 | B=0; C=2.4 | 0.24 | 9.02 | 40/36/113/3/3 | --- | 0 (0.10) | 9.93 |
| S | A wherein A=4; B=0.45 Tipt; C=0; D=0 | B=6 $VOCl_3$; C=2.4 | 0.32 | 8.32 | 40/36/122/3/3 | --- | 0 (0.10) | 9.65 |

The above data indicates that when the polymerization conditions are operated so as to produce a polymer having a melt flow or melt index by ASTM D 1238-70 of less than or equal to 1.5 the polymers produced with a catalyst containing vanadium had a lower melt flow ratio ($I_{10}/I_2$) indicating a narrower molecular weight distribution as compared to a like catalyst containing no vanadium. The melt flow of the polymers can be adjusted by the amount of hydrogen employed or by altering the temperature.

Following the procedure for the preparation of the complexes, various vanadium complexes were

prepared. The components are given in Table III.

The L/M ratio in each instance was 1:1 (moles of dihydroxyl compound per mole of V). The components employed are given in the following Table III. The elemental analysis for each of the products and water of hydration in the products is also given in Table III.

TABLE III

| EXAMPLE NUMBER | HYDROXYL COMPOUND | VANADIUM COMPOUND | ELEMENTAL ANALYSIS %C CALC. | %C FND. | %H CALC. | %H FND. | WATER OF HYDRATION |
|---|---|---|---|---|---|---|---|
| 54 | Formula VIII wherein y=0 | $VO(OiPr)_3$ | 65.9 | 66.2 | 4.8 | 5.2 | 0.5 |
| 55 | Formula VIII wherein y=0 | $VO(OiPr)_3$ | 58 | 58.1 | 3.1 | 3.2 | 1.5 |
| 56 | Formula II wherein y=0; n=0; OH's are ortho to the bridge | $VO(OiPr)_3$ | 59.3 | 58.7 | 5.3 | 5.2 | 0 |
| 57 | Formula II wherein y=0; n=0; OH's are ortho to the bridge | $VO(Cl)_3$ | 47.7 | 47.7 | 4 | 3.4 | 1.5 |
| 58 | Formula II wherein n=1; y=0; A=$CH_2$; OH's are ortho to the bridge | $VO(OiPr)_3$ | 56.4 | 55.6 | 5.1 | 4.8 | 0.5 |

TABLE III (Cont.)

| EXAMPLE NUMBER | HYDROXYL COMPOUND | VANADIUM COMPOUND | ELEMENTAL ANALYSIS %C CALC. | %C FND. | %H CALC. | %H FND. | WATER OF HYDRATION |
|---|---|---|---|---|---|---|---|
| 63 | Formula X wherein n=1; $R^1$=H; $R^2$=$CH_3$ | $VO(OiPr)_3$ | 39.2 | 39.2 | 7.1 | 7.4 | 0 |
| 64 | Formula XII wherein $n^2$=1; $x^1$=1; $A^1$=$CH_2$; OH's are ortho to ring | $VO(OiPr)_3$ | 55.4 | 55.6 | 4.9 | 4.9 | 0.5 |

TABLE III (Cont.)

| EXAMPLE NUMBER | HYDROXYL COMPOUND | VANADIUM COMPOUND | ELEMENTAL ANALYSIS %C CALC. | %C FND. | %H CALC. | %H FND. | WATER OF HYDRATION |
|---|---|---|---|---|---|---|---|
| 59 | Formula II wherein n=1; y=0; $A=CH_2$; OH's are ortho to the bridge | $VO(Cl)_3$ | 48.8 | 49 | 3.1 | 2.5 | 0.5 |
| 60 | Formula I wherein y=1; R=OH; X=t-butyl; OH's are para to ring | $VO(OiPr)_3$ | 53.8 | 53.4 | 6.6 | 5.9 | 0 |
| 61 | Formula I wherein $n^2=1$; R1=H; $R^2=CH_3$ | $VO(Cl)_3$ | 25.2 | 28.6 | 4.23 | 5 | 0 |
| 62 | Formula XII wherein n=1; $Al=CH_2$; OH's are ortho to ring | $VO(Cl)_3$ | 40.3 | 40.5 | 3.4 | 3.3 | 0 |

## Claims

1. A catalyst which is the catalytic product obtainable by reacting in an inert hydrocarbon medium
   (A) at least one hydrocarbon soluble organomagnesium component represented by the formula $MgR''_2 \cdot xMR''_y$ wherein each R" is independently a hydrocarbyl group having from 1 to 20 carbon atoms and not containing functional groups that poison conventional Ziegler catalysts; M is a Al, Zn, Si, Sn, B or P; y has a number corresponding to the valence of M and x has a value from zero to 10;
   (B) a sufficient quantity of at least one halide source so as to convert all of the organic groups attached to a magnesium atom in component (A) to a halide group;
   (C) at least one titanium compound represented by the formula $Ti(OR)_xX_{4-x}$ wherein each R is independently a hydrocarbyl group having from 1 to 20 carbon atoms and not containing functional groups that poison conventional Ziegler catalysts; X is a halogen and x has a value from zero to 4; and
   (D) optionally, at least one compound containing at least one aromatic hydroxyl group or at least one

aliphatic hydroxyl group or a mixture of such compounds; and
when components (A) and/or (B) do not contain or contain an insufficient quantity of aluminum, then
(E) an aluminum compound represented by the formula

$$AlR'''_{y'}X_{y''}$$

wherein R''' is a hydrocarbyl group having from 1 to 10 carbon atoms and not containing functional groups that poison conventional Ziegler catalysts; X is halogen and y' and y'' each have a value of from zero to three with the sum of y' and y'' being three is employed; (F) a vanadium compound represented by the formulas $VO(X)_3$, $V(X)_4$ or $VO(OR''')_3$ wherein X and R''' are as defined above;
characterized by said halide source being
(1) an active non-metallic halide, corresponding to the formula R'X wherein X is halogen and R' is hydrogen or a hydrocarbyl group having from 1 to 20 carbon atoms and such that the hydrocarbyl halide is at least as active (i.e. loosing its halogen atom) as sec-butyl chloride and does not poison the catalyst; or
(2) aluminum halides of the formula $AlR_{3-a}X_a$ wherein each R is independently hydrocarbyl as hereinbefore defined, X is a halogen and a is a number from 1 to 3,
and wherein the components are employed in quantities so as to provide the following ratios:
(1) a Mg:Ti atomic ratio of from 1:1 to 200:1;
(2) components (C) and (D) are employed in quantities which provide a molar ratio of (D):(C) of from 0:1 to 10:1;
(3) an excess X to Al ratio, i.e. the quantity of halide X above that which would be theoretically required to convert the magnesium compound to the dihalide, of from 0.0005:1 to 10:1.
(4) an Al:Ti atomic ratio of from 0.1:1 to 2000:1;
the Mg:Ti ratio expressed above is expressed as a Mg:Ti+V ratio with the same values as the Mg:Ti ratio and wherein component (F) is employed in quantities which provides a V:Ti ratio of from 0.1:1 to 50:1.

**2.** Catalyst of Claim 1 wherein
(i) in component (A) M is aluminum;
(ii) component (B) is hydrogen chloride or an aluminum chloride;
(iii) the Mg:Ti+V atomic ratio is from 2:1 to 100:1;
(iv) components (C) and (D) are present in quantities which provides a molar ratio of (D):(C) of from 0.1:1 to 10:1;
(v) the excess X:Al ratio is from 0.002:1 to 2:1;
(vi) the Al:Ti atomic ratio is from 0.5:1 to 200:1; and
(vii) the V:Ti atomic ratio is from 0.5:1 to 10:1.

**3.** Catalyst of Claim 2 wherein
(i) component (A) is n-butyl-s-butylmagnesium or n-butyl-ethylmagnesium;
(ii) the Mg:Ti+V atomic ratio is from 5:1 to 50:1;
(iii) components (C) and (D) are present in quantities which provides a molar ratio of (D):(C) of from 1:1 to 2:1;
(iv) the excess X:Al ratio is from 0.01:1 to 1.4:1;
(v) the Al:Ti atomic ratio is from 1:1 to 75:1; and
(vi) the V:Ti atomic ratio is from 1:1 to 5:1.

**4.** Catalyst of Claim 3 wherein component (C) is titanium tetrachloride; and component (F) is vanadium tetrachloride.

**5.** Catalyst of Claim 3 wherein component (C) is a tetralkoxytitanium compound, component (D) is ethylaluminum dichloride and component (F) is $VOCl_3$.

**6.** A process for polymerizing one or more $\alpha$-olefins under polymerization conditions in the presence of a catalyst of any one of Claim 1 to 5.

**7.** Bidentate ligand-containing vanadium complexes represented by the formula

Q Q' V O

wherein Q' is a halide or a hydrocarbyloxy group having from 1 to 20 carbon atoms and Q is a ligand represented by formulas XVI - XIX:

XVI.

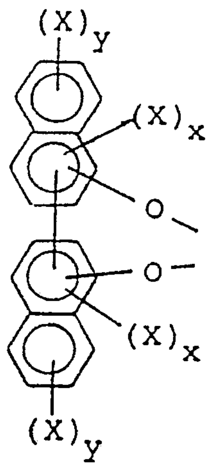

XVII.

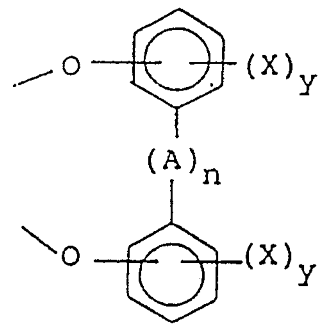

XVIII.

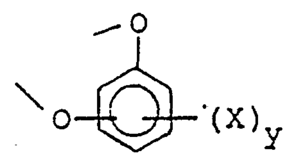

XIX.

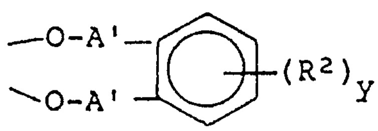

wherein A, A', $R^2$, X, n, x and y are defined as follows: each A is independently a divalent hydrocarbyl group having from 1 to 10, preferably from 1 to 4, carbon atoms, -O-, -S-, -S-S-,

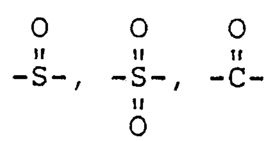

or

R''
|
-N- ;

each A' is independently a divalent hydrocarbyl group having from 1 to 10, preferably from 1 to 4, carbon atoms; each R'' is independently hydrogen or a hydrocarbyl group having from 1 to 10; preferably from 1 to 6, carbonatoms; each $R^2$ is independently hydrogen, a halogen atom, a hydrocarbyl group, a hydrocarbyloxy group or a halogen, nitro or hydrocarbyloxy substituted hydrocarbyl group or a halogen, nitro or hydrocarbyloxy substituted hydrocarbyloxy group, each such hydrocarbyl or hydrocarbyloxy group having from 1 to 20, preferably from 1 to 10 carbon atoms;
each X is independently a hydroxyl group, a nitro group, a nitrile group, a hydrocarbyl group, a hydrocarbyloxy group, a hydroxyl substituted hydrocarbyl or a hydroxyl substituted hydrocarbyloxy group each such groups having from 1 to 20, preferably from 1 to 12, carbon atoms or a halogen;
each n independently has a value of zero or 1; each x independently has a value of from zero to 2; each y independently has a value of from zero to 4, preferably from 1 to 2.

## Revendications

1. Catalyseur qui est le produit à propriétés catalytiques que l'on peut obtenir en faisant réagir, dans un milieu hydrocarboné inerte

(A) au moins un composant organomagnésien, soluble dans les hydrocarbures, représenté par la formule $MgR''_2 \cdot xMR''_y$, dans laquelle chaque R'' représente indépendamment un groupe hydrocarboné comportant de 1 à 20 atomes de carbone et ne contenant pas de groupes fonctionnels qui empoisonnent les catalyseurs classiques de Ziegler, M représente Al, Zn, Si, Sn, B ou P, y est un nombre correspondant à la valence de M et x vaut de 0 à 10 ;

(B) une certaine quantité d'au moins une source d'halogénure, suffisante pour convertir tous les groupes organiques liés à un atome de magnésium dans le composant (A) en halogénure ;

(C) au moins un composé du titane représenté par la formule $Ti(OR)_xX_{4-x}$, dans laquelle chaque R représente indépendamment un groupe hydrocarboné comportant de 1 à 20 atomes de carbone et ne contenant pas de groupes fonctionnels qui empoisonnent les catalyseurs classiques de Ziegler, X représente un atome d'halogène et x vaut de 0 à 4 ; et

(D) éventuellement, au moins un composé contenant au moins un groupe hydroxyle aromatique ou au moins un groupe hydroxyle aliphatique, ou un mélange de tels composés ; et

si les composants (A) et/ou (B) contiennent une quantité insuffisante d'aluminium ou n'en contiennent pas du tout, on utilise alors

(E) un composé de l'aluminium représenté par la formule $AlR'''_{y'}X_{y''}$, dans laquelle R''' représente un groupe hydrocarboné comportant de 1 à 10 atomes de carbone et ne contenant pas de groupes fonctionnels qui empoisonnent les catalyseurs classiques de Ziegler, X représente un atome d'halogène et y' et y'' valent chacun de 0 à 3 , la somme de y' et y'' valant 3 ;

(F) un composé du vanadium représenté par la formule $VO(X)_3$, $V(X)_4$ ou $VO(OR)_3$, X et R étant tels que définis ci-dessus ;

**caractérisé** en ce que ladite source d'halogénure est

(1) un halogénure non métallique actif, correspondant à la formule R'X dans laquelle X représente un atome d'halogène et R' représente un atome d'hydrogène ou un groupe hydrocarboné comportant de 1 à 20 atomes de carbone et tel que l'halogénure d'hydrocarbure est au moins aussi actif (cession de son atome d'halogène) que le chlorure de s-butyle et n'empoisonne pas le catalyseur ; ou

(2) des halogénures d'aluminium de formule $AlR_{3-a}X_a$ dans laquelle chaque R représente indépendamment un groupe hydrocarboné tel que défini ci-dessus, X représente un atome d'halogène et a est un nombre valant de 1 à 3 ;

et dans lequel les composants sont utilisés en des quantités qui fournissent les proportions suivantes :

(1) le rapport atomique Mg/Ti vaut de 1/1 à 200/1 ;

(2) les composants (C) et (D) sont utilisés en des quantités qui donnent un rapport molaire (D)/(C) valant de 0/1 à 10/1 ;

(3) le rapport d'excès de X à Al, c'est-à-dire la quantité d'halogénure X en plus de celle qui serait théoriquement nécessaire pour convertir le composé du magnésium en le dihalogénure, vaut de

0,0005/1 à 10/1 ;
(4) le rapport Mg/Ti donné ci-dessus exprimant le rapport Mg/Ti + V avec les mêmes valeurs que le rapport Mg/Ti, et le composant (F) étant utilisé en des quantités qui fournissent un rapport V/Ti valant de 0,1/1 à 50/1.

**2.** Catalyseur de la revendication 1, dans lequel
(i) dans le composant (A), M représente l'aluminium ;
(ii) le composant (B) est du chlorure d'hydrogène ou un chlorure d'aluminium ;
(iii) le rapport atomique Mg/Ti + V vaut de 2:1 à 100:1 ;
(iv) les composants (C) et (D) sont présents en des quantités qui fournissent un rapport molaire (D)/(C) valant de 0,1/1 à 10/1 ;
(v) le rapport (excès de X)/Mg vaut de 0,002/1 à 2/1 ;
(vi) le rapport atomique Al/Ti vaut de 0,5/1 à 200/1 ; et
(vii) le rapport atomique V/Ti vaut de 0,5/1 à 10/1.

**3.** Catalyseur selon la revendication 2, dans lequel
(i) le composant (A) est du n-butyl-s-butyl-magnésium ou du n-butyl-éthyl-magnésium ;
(ii) le rapport atomique Mg/Ti + V vaut de 5/1 à 50/1 ;
(iii) les composants (C) et (D) sont présents en des quantités qui fournissent un rapport molaire (D)/(C) valant de 1/1 à 2/1 ;
(iv) le rapport (excès de X)/Mg vaut de 0,01 à 1,4/1 ;
(v) le rapport atomique Al/Ti vaut de 1/1 à 75/1 ; et
(vi) le rapport atomique V/Ti vaut de 1/1 à 5/1.

**4.** Catalyseur selon la revendication 3, dans lequel le composant (C) est du tétrachlorure de titane et le composant (F) est du tétrachlorure de vanadium.

**5.** Catalyseur selon la revendication 3, dans lequel le composant (C) est un composé tétraalcoxy-titane, le composant (D) est du dichlorure d'éthyl-aluminium et le composant (F) est $VOCl_3$.

**6.** Procédé de polymérisation d'une ou plusieurs $\alpha$-oléfines dans des conditions de polymérisation, en présence d'un catalyseur selon l'une quelconque des revendications 1 à 5.

**7.** Complexes du vanadium contenant un coordinat bidenté, représentés par la formule

Q Q' V O

dans laquelle Q' représente un ion halogénure ou un groupe hydrocarboné-oxy comportant de 1 à 20 atomes de carbone, et Q représente un coordinat représenté par l'une des formules XVI à XIX :

XVI.

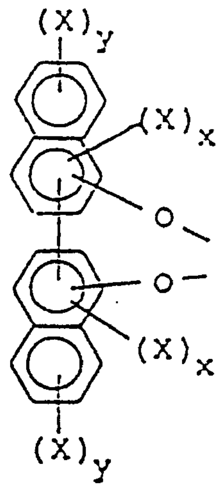

XVII.

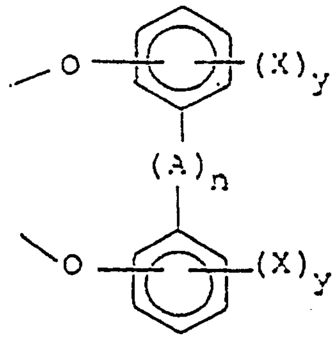

XVIII.

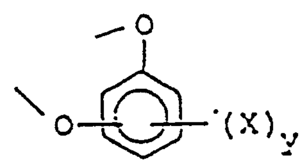

XIX.

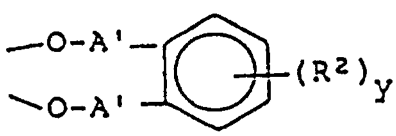

dans lesquelles A, A', $R^2$, X, n, x et y sont définis de la façon suivante :

chaque A représente indépendamment un groupe hydrocarboné divalent comportant de 1 à 10 atomes de carbone et de préférence de 1 à 4 atomes de carbone, -O-, -S-, -S-S-, -SO-, $-SO_2-$, -CO- ou -NR''- ;

chaque A' représente indépendamment un groupe hydrocarboné comportant de 1 à 10 atomes de carbone et de préférence de 1 à 4 atomes de carbone ;

chaque R'' représente indépendamment un atome d'hydrogène ou un groupe hydrocarboné comportant de 1 à 10 atomes de carbone et de préférence de 1 à 6 atomes de carbone ;

chaque $R^2$ représente indépendamment un atome d'hydrogène ou d'halogène ou un groupe hydrocarboné, un groupe hydrocarboné-oxy, un groupe hydrocarboné substitué par halogène, nitro ou hydrocarboné-oxy, ou un groupe hydrocarboné-oxy substitué par halogène, nitro ou hydrocarboné-oxy, chacun de ces groupes hydrocarbonés ou hydrocarbonés-oxy comportant de 1 à 20 atomes de carbone, et de préférence de 1 à 10 atomes de carbone ;

chaque X représente indépendamment un groupe hydroxyle, un groupe nitro, un groupe nitrile, un groupe hydrocarboné, un groupe hydrocarboné-oxy, un groupe hydrocarboné substitué par hydroxyle ou un groupe hydrocarboné-oxy substitué par hydroxyle, chacun de ces groupes comportant de 1 à 20 atomes de carbone, de préférence de 1 à 12 atomes de carbone, ou encore un atome d'halogène ;

chaque n vaut indépendamment 0 ou 1, chaque x vaut indépendamment de 0 à 2 ; chaque y vaut indépendamment de 0 à 4, de préférence de 1 à 2.

## Patentansprüche

1. Katalysator, der das katalytische Produkt ist, erhältlich durch in einem inerten Kohlenwasserstoff-Medium zur Reaktionbringen von

   (A) mindestens einer Kohlenwasserstoff-löslichen Organomagnesium-Komponente, dargestellt durch die Formel $MgR''_2 \cdot xMR''_y$, worin jedes R'' unabhängig eine Kohlenwasserstoffgruppe mit 1 bis 20 Kohlenstoffatomen ist und keine funktionellen Gruppen enthält, die konventionelle Ziegler-Katalysatoren vergiften; M Al, Zn, Si, Sn, B oder P ist;

   y eine Zahl entsprechend der Valenz von M ist und x einen Wert von 0 bis 10 aufweist;

   (B) einer ausreichenden Menge mindestens einer Halogenidquelle, um alle der an ein Magnesiumatom in Komponente (A) gebundenen organischen Gruppen in Halogenidgruppen zu überführen, (C) mindestens einer Titanverbindung, welche durch die Formel $Ti(OR)_xX_{4-x}$ dargestellt wird, worin jedes R unabhängig eine Kohlenwasserstoffgruppe mit 1 bis 20 Kohlenstoffatomen ist und keine funktionellen Gruppen enthält, die konventionelle Ziegler-Katalysatoren vergiften;
X ein Halogen ist und x einen Wert zwischen 0 und 4 aufweist und
(D) gegebenenfalls mindestens einer Verbindung enthaltend mindestens eine aromatische Hydroxylgruppe oder mindestens eine aliphatische Hydroxylgruppe oder eine Mischung solcher Verbindungen; und
wenn Komponenten (A) und/oder (B) nicht oder nicht ausreichende Mengen von Aluminium enthalten, dann
(E) eine Aluminiumverbindung, dargestellt durch die Formel $AlR''y,X_{y''}$, worin R''' eine Kohlenwasserstoffgruppe mit 1 bis 10 Kohlenstoffatomen ist und keine funktionellen Gruppen enthält, die konventionelle Ziegler-Katalysatoren vergiften; X ein Halogen und y' und y'' jeweils einen Wert von 0 bis 3 haben, wobei die Summe von y' und y'' 3 ist, verwendet wird;
(F) eine Vanadiumverbindung, dargestellt durch die Formeln $VO(x)_3$, $V(X)_4$ oder $VO(OR''')_3$, worin X und R''' wie oben definiert sind;
**dadurch gekennzeichnet,**
daß die Halogenidquelle
(1) ein aktives nichtmetallisches Halogenid, entsprechend der Formel R'X ist, worin X ein Halogen und R' Wasserstoff oder eine Kohlenwasserstoffgruppe mit 1 bis 20 Kohlenstoffatomen ist und derart ist, daß das Kohlenwasserstoffhalogenid mindestens so aktiv (d.h. sein Halogenatom verlierend) ist wie sekundäres Butylchlorid und den Katalysator nicht vergiftet; oder
(2) Aluminiumhalogenide der Formel $AlR_{3-a}X_a$ sind, worin jedes R unabhängig Kohlenwasserstoff wie oben definiert, X ein Halogen und a eine Zahl von 1 bis 3 ist,
und worin die Komponenten in derartigen Mengen verwendet werden, daß sie die folgenden Verhältnisse bereitstellen:
(1) ein Mg:Ti Atomverhältnis von 1:1 bis 200:1;
(2) Komponenten (C) und (D) in Mengen verwendet werden, die ein molares Verhältnis von (D) zu (C) zwischen 0:1 und 10:1 bereitstellen;
(3) ein Überschuß X:Al-Verhältnis, d.h. die Menge von Halogenid X oberhalb der, die theoretisch benötigt würde, um die Magnesiumverbindung in ein Dihalogenid überzuführen, von 0,0005:1 bis 10:1;
(4) ein Al:Ti Atomverhältnis von 0,1:1 bis 2000:1; wobei das Mg:Ti Verhältnis, das oben genannt ist, als ein Mg:Ti+V Verhältnis ausgedrückt ist mit denselben Werten wie das Mg:Ti Verhältnis und worin Komponente (F) in solchen Mengen verwendet wird, die für ein V:Ti Verhältnis von 0,1:1 bis 50:1 sorgen.

2. Katalysator nach Anspruch 1, worin
(i) in der Komponente (A) M Aluminium ist;
(ii) Komponente (B) Chlorwasserstoff oder ein Aluminiumchlorid ist;
(iii) das Mg:Ti+V Atomverhältnis zwischen 2:1 und 100:1 liegt,
(iv) Komponenten (C) und (D) in Mengen vorhanden sind, die für ein molares Verhältnis von (D) zu (C) von zwischen 0,1:1 und 10:1 sorgen;
(v) das Überschuß X:Al Verhältnis zwischen 0,002:1 und 2:1 liegt;
(vi) das Al:Ti Atomverhältnis zwischen 0,5:1 und 200:1 liegt; und
(vii) das V:Ti Atomverhältnis zwischen 0,5:1 und 10:1 liegt.

3. Katalysator nach Anspruch 2, worin
(i) Komponente (A) n-Butyl-s-butylmagnesium oder n-Butyl-ethylmagnesium ist;
(ii) das Mg:Ti+V Atomverhältnis zwischen 5:1 und 50:1 liegt;
(iii) Komponenten (C) und (D) in Mengen vorhanden sind, die für ein molares Verhältnis von (D) zu (C) von zwischen 1:1 und 2:1 sorgen;
(iv) das Überschuß X:Al Verhältnis zwischen 0,01:1 und 1,4:1 liegt;
(v) das Al:Ti Atomverhältnis zwischen 1:1 und 75:1 liegt; und
(vi) das V:Ti Atomverhältnis zwischen 1:1 und 5:1 liegt.

4. Katalysator nach Anspruch 3, worin Komponente (C) Titantetrachlorid ist und Komponente (F) Vanadiumtetrachlorid ist.

5. Katalysator nach Anspruch 3, worin Komponente (C) eine Tetraalkoxytitan-Verbindung, Komponente (D) Ethylaluminiumdichlorid und Komponente (F) $VOCl_3$ ist.

6. Verfahren zur Polymerisierung eines oder mehrerer α-Olefine unter Polymerisationsbedingungen in Anwesenheit eines Katalysators nach einem der Ansprüche 1 bis 5.

7. Zweizähnige, Ligand-enthaltende Vanadiumkomplexe, dargestellt durch die Formel

Q Q' V O

worin Q' ein Halogenid oder eine Hydrocarbyloxy-Gruppe mit 1 bis 20 Kohlenstoffatomen und Q ein Ligand ist, der durch die Formeln XVI bis XIX dargestellt wird:

XVI.

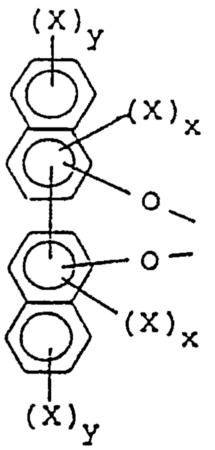

XVII.

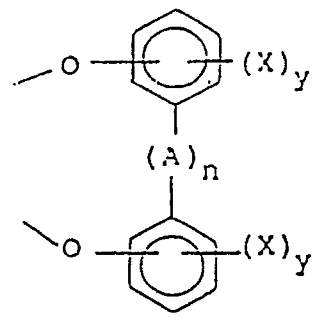

XVIII.

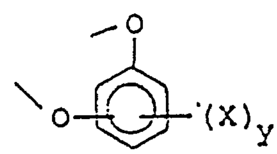

XIX.

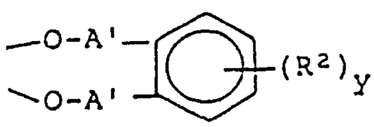

worin A, A', $R^2$, X, n, x und y wie folgt definiert sind: jedes A unabhängig eine divalente Kohlenwasserstoffgruppe mit 1 bis 10, vorzugsweise 1 bis 4 Kohlenstoffatomen, -O-, -S-, -S-S-,

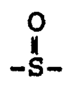 , 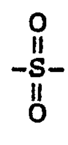 , 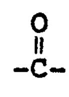

oder

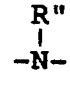

ist; jedes A' unabhängig eine divalente Kohlenwasserstoffgruppe mit 1 bis 10, vorzugsweise 1 bis 4 Kohlenstoffatomen ist;
jedes R" unabhängig Wasserstoff oder eine Kohlenwasserstoffgruppe mit 1 bis 10, vorzugsweise 1 bis 6 Kohlenstoffatomen ist;
jedes $R^2$ unabhängig Wasserstoff, ein Halogenatom, eine Kohlenwasserstoffgruppe, eine Hydroxycarbyloxygruppe oder eine Halogen-, Nitro- oder Hydrocarbyloxy-substituierte Kohlenwasserstoffgruppe oder eine Halogen-, Nitro- oder Hydrocarbyloxy-substituierte Hydrocarbyloxy-Gruppe ist, wobei jede derartige Kohlenwasserstoff- oder Hydrocarbyloxygruppe 1 bis 20, vorzugsweise 1 bis 10 Kohlenstoffatome aufweist;

jedes X unabhängig eine Hydroxylgruppe, eine Nitrogruppe, eine Nitrilgruppe, eine Kohlenwasserstoffgruppe, eine Hydrocarbyloxygruppe, eine Hydroxyl-substituierte Kohlenwasserstoff- oder eine Hydroxyl-substituierte Hydrocarbyloxygruppe ist, wobei solche Gruppen 1 bis 20, vorzugsweise 1 bis 12 Kohlenstoffatome aufweisen, oder ein Halogen ist;
jedes n unabhängig einen Wert von 0 oder 1 hat; jedes x unabhängig einen Wert von 0 bis 2 hat; jedes y unabhängig einen Wert von 0 bis 4, vorzugsweise 1 bis 2 aufweist.